# EUROPEAN PATENT APPLICATION

(11) **EP 1 522 830 A1**
(43) Date of publication of application: **13.04.2005**
(21) Application number: 04018525.8
(22) Date of filing: 05.08.2004
(51) Int. Cl.: G01G 19/10

(54) **A tipper truck load checking system**

(30) Priority: 07.10.2003 IT BO20030575
(71) Applicant: EMILCAMION S.r.l., 40050 Argelato (Bologna) (IT)
(72) Inventor: Bettini, Marco, 40010 Bentivoglio (Bologna) (IT)
(74) Representative: Lanzoni, Luciano

(57) **Abstract**

A vehicle (1) load (5) checking system, comprises: means (6) for detecting vehicle (1) load (5) data; means (8) for transmitting said load (5) data; means (9) for receiving the load data transmitted by the transmitter means (8); processing means (10) designed to receive the load data at input and correlate it with predetermined safety limits, so as to obtain one or more output signals corresponding to the load conditions detected; means (7) for indicating, on the basis of said output signals, when the load conditions detected reach and/or approach said safety limits. [Figure 1]

## Description

The present invention relates to a system for detecting and checking the load present on transport vehicles, and in particular vehicles with a tipper body.

As is known, one of the most critical aspects of tipper truck loading and transport operations is the need to load the maximum quantity of material, whilst always remaining within the legal safety limits, violation of which could have serious consequences for both the driver and the vehicle owner.

Faced with these problems, during loading the driver must carefully but approximately assess the quantity of material to be transported, with a consequent probable reduction in the profitability of the transport (relative to the maximum which could be achieved), always running the risk of incurring sanctions if a check reveals that the assessment of the load was incorrect.

At present there are also systems available for measuring the weight of the load, in theory sufficient to assess whether or not transport safety conditions are observed.

In reality, load measuring operations are complex, require precise environmental situations and procedures and, therefore, are not suitable for the actual yard conditions in which the vehicle is often loaded.

Consequently, the use of normal measuring systems is slow, difficult and uneconomical, and at times even unavailable, for the carrier.

Therefore, the need is felt for a checking system which guarantees that the driver will not exceed the load limits allowed, and which, at the same time, does not oblige the driver to carry out lengthy and complex measuring operations.

The main aim of the load checking system according to the present invention is, therefore, to establish whether or not a vehicle (truck, trailer, semi-trailer) for example of the type with a tipping upper structure, whether rear or three-sided, has loaded a quantity of material which will make the vehicle exceed the overall predetermined weight limits, for example with relation to the legal limits specified, or those recommended for safe transport.

Another aim is to guarantee that the vehicle circulates on the roads with a completely safe load, as it was designed and as allowed by the law (the Highway Code), also avoiding legal sanctions which involve not just a fine, but also restrictive or punitive measures as regards the driver's right to drive.

It must be emphasised that this system is not proposed so much as an instrument for measuring the load on the vehicle, but rather as an "customised safety" instrument, which allows the user to assess when his or her vehicle will not incur the above-mentioned sanctions and he/she can travel without worrying and in complete safety irrespective of the need to check the weight every time.

These aims are fulfilled by a checking system and method as described in the main claims herein.

Further advantageous features are described in the dependent claims.

The technical characteristics of the invention, with reference to the above aims, and its advantages are clearly described in the detailed description which follows, with reference to the accompanying drawings which illustrate a preferred embodiment of the invention provided merely by way of example without restricting the scope of the inventive concept, and in which:
- Figure 1 is a schematic illustration of a vehicle with a tipper body;
- Figures 2a-2f illustrate various possible vehicle load conditions;
- Figure 3 is a schematic illustration of the components of the checking system made in accordance with the present invention;
- Figure 4 illustrates the system made in accordance with the present invention applied to a vehicle of the type with a roll-on/roll-off container body;
- Figure 5 illustrates the system with the transducer and the transmitter housed in separate bodies.

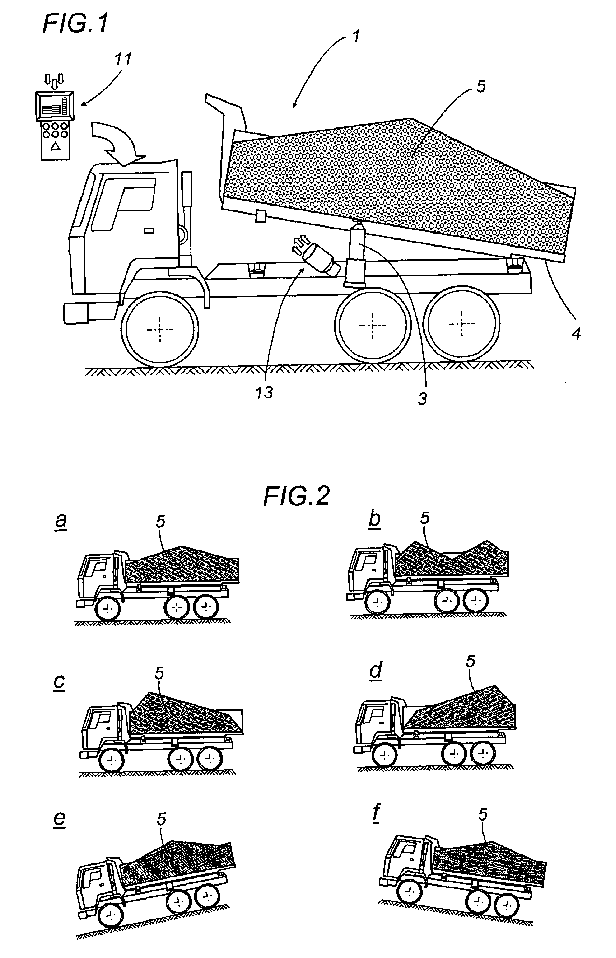

With reference to the accompanying drawings, a system is described which is applied to a vehicle 1 with a tipper body 4 operated by a hydraulic cylinder 3, of the type schematically illustrated in Figure 1.

However, it is understood that the same system may be applied with simple adaptations to various types of vehicles (tipper trucks, trailers, semi-trailers, roll-on/roll-off containers).

With reference to Figure 1, the system comprises:
- a pressure transducer 6 for detecting the load 5 on the vehicle 1;
- a transmitter 8 for the load reading taken by the transducer;
- a receiver 9 for the signal issued by the transmitter;
- a microprocessor processing unit 10, preferably integrated with the receiver;
- an indicator device connected to the processing unit, for example a display 7, which provides an indication of the vehicle load and when the safety limit conditions are approached.

In greater detail, the transducer 6 is applied to the hydraulic lifting circuit 3 and is connected to the transmitter 8, to which it sends the signals relative to the hydraulic circuit operating pressure.

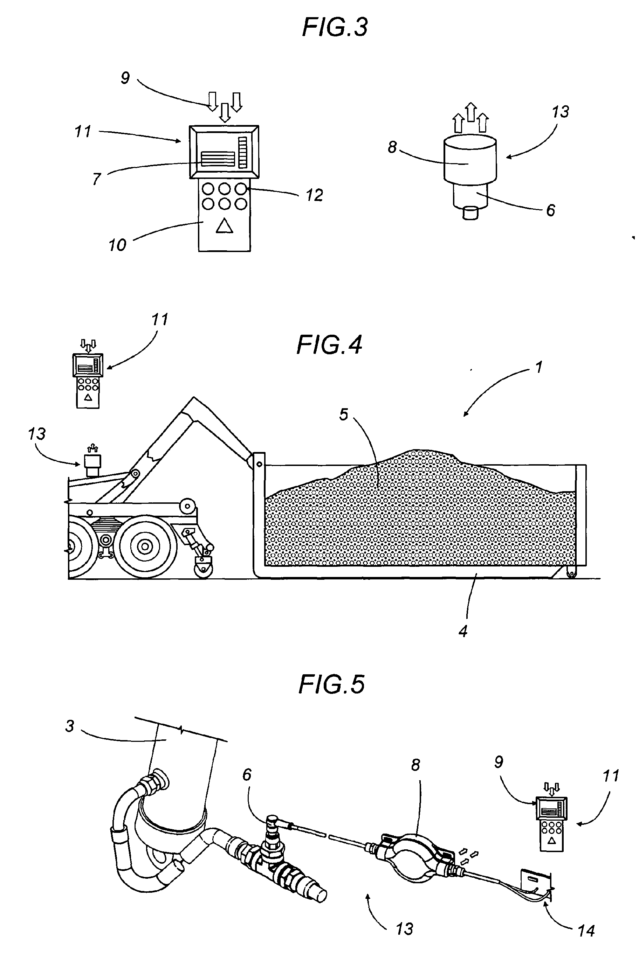

In various embodiments, the transmitter 8 and the transducer 6 may be connected by cables and may be housed in the same unit or in separate units (Figure 5).

In the latter case, the transmitter may advantageously be housed in a unit 8' to be fixed to the structure of the chassis and connected on one side to the transducer 6, by a cable of the known type and, on the other, to the receiver 9 by means of radio frequency transmission.

The transmitter may also be powered by a power supply unit 14 consisting of its own battery or by the vehicle's battery.

As illustrated in Figure 3, the load display 7 may be integrated with the processing unit 10 and the receiver 9 in a portable electronic box 11, preferably battery-powered, which begins communicating with the transmitter 8 when the vehicle is started up.

Advantageously, the portability of the box 11, for example consisting of a palmtop device, gives an operating radius of up to approximately 20 metres from the transmitter 8, which allows the operator to check vehicle loading operations by observing them directly from the ground, so that he/she can progressively guide the best load positioning, and in particular during the final, critical steps, that is to say, when the loading methods used for the last material added may or may not result in possible overloading.

The box 11 will preferably have means (hooks, handles, supports) which allow it to be positioned in the vehicle cab.

Communication between the receiver 9 and the transmitter 8 is preferably unique, so that a receiver recognises a relative transmitter as a unique device with which it can communicate.

For example, the uniqueness of the communication between a receiver 9 and a transmitter 8 allows a single portable box 11 to be used, such as a palmtop device, connected to a plurality of vehicles, which can all be controlled individually. One application of this function may be when the presence of an operator supervising the simultaneous loading of two or more vehicles is required.

In this case, the supervising operator will have a palmtop device 11 fitted with a receiver 9 which can receive unique communications from the transmitters 8 of the various vehicles, which at the same time will send the same signals to the people in charge of the individual vehicles, allowing a double check of loading operations.

In a preferred embodiment, the transmission between the box 11 and the transmitter 8 occurs using radio frequency with a unique address assignment so as to avoid communication problems if there are two or more vehicles with similar transmitters nearby, or other vehicles equipped with the system disclosed.

In practice, the microprocessor unit may be activated at will by the driver, after which the system automatically runs a (known) test to ensure that it is operating correctly.

If everything in the checking system is within the operating parameters set, the load reading is taken.

During this step, as soon as the cylinder 3 begins lifting the tipper body 4 with the load 5, the transmitter 8 transmits the pressure value detected by the transducer on the vehicle hydraulic circuit 6.

The receiver 9 transfers the data corresponding to the pressure value measured to the microprocessor processing unit 10.

When it has processed the data received based on predetermined settings (type of vehicle, safety parameters, specific operating conditions), the unit 10 generates results corresponding to the reading taken, correlated with the vehicle and the effective vehicle load conditions.

The results of the processing are then sent to the indicator device 7 so as to indicate to the carrier the quantity of material required to reach 100% of a "safe load" limit value associated with the vehicle in question on the basis of the settings entered.

In a preferred embodiment the indicator device is a light bar visual display, which may have bars in different colours, progressively indicating the remaining load quantity required to reach the limit set.

For example, there may be twenty light bars displayed, indicating a loaded quantity of from 92.5% of the safe load limit set to 102.5%, a value which also allows an indication of overloading.

For example, if the vehicle safe load limit (by law or for specific safety reasons) is 40,000 kg (equal to 100%), the indication of the twenty light bars (markers) will be divided as follows:
- the first 5 bars start by indicating from 37,000 kg (92.5%) and may be green in the screen-printing on the container;
- the next 10 bars will be associated with the colour yellow in the screen-printing on the container;
- the last 5 bars may be red in the screen-printing on the container and the last bar will correspond to 41,000 kg (102.5%).

There is also a set of yellow and red LEDs and a buzzer, which help the operator to read the display.

In this embodiment of the indicator device, corresponding to a load indicator bar, there may be screen-printed on the container the colour green when the load is within the legal limit, yellow when the load is close to the predetermined maximum limit allowed, and red when it exceeds the maximum limit.

Moreover, according to the invention the electronic box 11 may also be equipped with a data entry device which interfaces with the unit 10 (consisting for example, but without limiting the scope, of a keypad 12) to allow system programming according to the type of vehicle and the maximum load associated with it.

The transducer 6 - load reading transmitter 8 unit may have microprocessor-based digital electronics, and a radio frequency transmitter unit and may be integrated in a single device 13, schematically illustrated in Figure 3.

The unit 13 is preferably powered when the vehicle is running, receiving power from the vehicle battery.

The load reading transmitter 8 is connected to a pressure transducer, preferably of the amplified type with a measuring range of up to 400 Bar, but it is understood that various values may be used.

In the embodiment illustrated, the pressure transducer 6 is installed close to the body 4 lifting cylinder 3 and can measure the pressure in the hydraulic cylinder 3.

The unit 13 electronics define the force F = P x A according to the pressure detected P and the area A of the hydraulic lifting cylinder.

By measuring P and knowing A, the force required to lift the body is obtained.

This reading is transmitted by radio frequency to the receiver 9, then to the unit 10, which processes the data item, updating the display 7 and therefore providing an indication of the load.

With reference to Figures 2a-f in a preferred embodiment of the invention, by means of the keypad 12 or another data entry device, it is possible to adjust the data correlating the load detected and the safety limit according to how the load is arranged in the truck body 4.

In this embodiment, the keypad 12 will have keys corresponding to a unit 10 adjustment function.

For example, by pressing a key corresponding to the "rear load" adjustment function (Figure 2d) or "front load" (Figure 2c) or "off-centre load" (Figure 2b) a calculation by the unit 10 is activated with the corresponding adjustment of the results (then sent to the indicator device 7) which takes into account the load condition that may be likened to the actual situation, thus calibrating the system to the actual situation in the yard.

Similarly, as illustrated in Figures figure 2e-f the calibration step may be activated if the vehicle is loaded on a slope.

During this calibration step it will also be possible to empirically acquire adjustment parameters depending on the vehicle itself, (structure, type and number of lifting cylinders, empty vehicle weight distribution, general state of the vehicle, etc.) and/or depending on the load distribution operating conditions.

According to said conditions the results of the processing may be calibrated and corrected, in a more or less precautionary fashion, that is to say lowering the safe load limit value.

No calibration will be necessary for a balanced load.

Entering into further detail, the system is calibrated by means of the keypad (or other data entry device) using a weighing device (of the conventional type) which measures the vehicle's effective overall load.

More generally, the system is calibrated by following a procedure in which any value detected by the pressure transducer 8 is correlated with the value of the vehicle overall load obtained from the weighing device.

Advantageously, the measuring error is significantly reduced in this way.

The same method is used for the load adjustment step mentioned above with reference to Figures 2a-f.

Advantageously, calibration, being extremely simple and aided by the keypad (or similar device), may be performed directly by the user.

The following example makes it obvious how easy to use the overload indicator system is and how, if necessary, it can be checked and initial calibration performed.

For example, to check that the system initial calibration is correct, the following operations are performed:
- the vehicle is loaded evenly with approximately the maximum load;
- it is weighed using a calibrated electronic weighing device and loading continues until the weighing device reading is, for example, 39,600 kg.

The effective measurement corresponds to a predetermined value of the signal issued by the transducer 6, which must be correlated with the load indication on the indicator device 7.

Knowing at this point that the vehicle maximum weight allowed by law is 40,000 kg, the indicator device is activated in the calibration function and the indicator device indication is made to coincide with the value close to 100% of the load.

In the above-mentioned case, if the indicator device has a display with 20 bars, each bar corresponds to 0.5% of the maximum weight (200 kg), and 13 bars will be lit, corresponding to 39,600 kg.

Therefore, 7 "markers" will not show on the display, equivalent to 1400 kg, required before the maximum overload value of 102.5%, (equivalent to 41,000 kg) is reached.

The adjusted load may be calibrated in the same way.

In the examples described, reference is made to a radio frequency transmission between a transmitter 8 and a receiver 9, however, the system may also use different technologies, with or without cables. In the same way, the indicator device 7 may be a display, as described above, or of a different type, for example acoustic, which may have different tones for progressive load readings, without thereby departing from the scope of the inventive concept.

The invention described is suitable for evident industrial applications and may be subject to modifications and variations without thereby departing from the scope of the inventive concept. Moreover, all details of the invention may be substituted by technically equivalent elements.

## Claims

1. A vehicle (1) load (5) checking system, **characterised in that** it comprises:
- means (6) for detecting vehicle (1) load (5) data;
- means (8) for transmitting the load (5) data;
- means (9) for receiving the load data transmitted by the transmitter means (8);
- processing means (10) designed to receive the load data at input and correlate it with predetermined safety limits, to obtain one or more output signals corresponding to the load conditions detected;
- means (7) for indicating, on the basis of said output signals, when the load conditions detected reach and/or approach said safety limits.

2. The system according to claim 1, in which the vehicle (1) is of the type with a tipper body (4) operated by a hydraulic cylinder (3), **characterised in that** the detector means (6) comprise a pressure transducer (6) sensitive to the operating pressure of the cylinder (3).

3. The system according to one or both of the foregoing claims, **characterised in that** the transmitter means (8) and the receiver means (9) are connected without a cable, preferably by means of radio frequency.

4. The system according to one or both of the claims 1 and 2, **characterised in that** the transmitter means (8) and the receiver means (9) are connected by cable.

5. The system according to one or more of the foregoing claims, **characterised in that** the receiver means (9), the processing means (10) and the displays means (7) are integrated in a portable box (11) which is easily accessible for the user.

6. The system according to one or more of the foregoing claims, **characterised in that** the detector means (6) and the transmitter means (8) are integrated in the same device (13).

7. The system according to one or more of the foregoing claims, **characterised in that** the transmitter means (8) and the receiver means (9) associated with the same vehicle (1) comprise unique reciprocal recognition means.

8. The system according to claim 7, **characterised in that** the unique recognition means comprise a signal with a unique address exchanged between the transmitter means and the receiver means.

9. The system according to one or more of the foregoing claims, **characterised in that** the processing means comprise a microprocessor unit (10).

10. The system according to one or more of the foregoing claims, **characterised in that** the processing means (10) comprise means (12) for interfacing with the user for the entry of data about the vehicle load or the vehicle itself.

11. The system according to claim 10, **characterised in that** the interface means comprise a keypad (12).

12. The system according to one or more of the foregoing claims, **characterised in that** the indicator means comprise a display (7).

13. The system according to claim 12, **characterised in that** the display comprises light display elements which may have different colours in response to output signals close to and/or corresponding to the value of the predetermined safety limits.

14. The system according to one or more of the foregoing claims, **characterised in that** input means (12) are designed to transmit to the unit (10) system calibration data relative to the vehicle (1) and/or the load (5).

15. The system according to one or more of the foregoing claims, **characterised in that** interface means (12) are designed to transmit to the unit (10) data relative to the distribution of the load (5) on the vehicle (1) so as to adjust the value of the output signals for the indicator (7).

16. A vehicle (1) load (5) checking device, **characterised in that** it comprises:
- means (9) for receiving the load (5) data;
- processing means (10) designed to receive the load data at input and correlate it with predetermined safety limits, to obtain one or more output signals corresponding to the load conditions detected;
- means (7) for indicating, on the basis of said output signals, when the load conditions detected reach and/or approach said safety limits.

17. The device according to claim 16, **characterised in that** the receiver means (9) operate by means of radio frequency.

18. The device according to claim 16, **characterised in that** the receiver means (9) operate by means of a cable.

19. The device according to one or more of the claims from 16 to 18, **characterised in that** the receiver means (9), the processing means (10) and the display means (7) are integrated in a portable box (11) which is easily accessible for the user.

20. The device according to one or more of the claims from 16 to 19, **characterised in that** the processing means comprise a microprocessor unit (10).

21. The device according to one or more of the claims from 16 to 20, **characterised in that** the processing means (10) comprise means (12) for interfacing with the user for the entry of data relative to the vehicle load or the vehicle itself.

22. The device according to claim 21, **characterised in that** the interface means comprise a keypad (12).

23. The device according to one or more of the claims from 16 to 22, **characterised in that** the indicator means comprise a display (7).

24. The device according to one or more of the claims from 16 to 23, **characterised in that** the display comprises display elements which have different colours in response to output signals close to and/or corresponding to the value of the predetermined safety limits.

25. The device according to one or more of the claims from 16 to 24, **characterised in that** input means
(12) are designed to transmit to the unit (10) system calibration data relative to the vehicle (1) and/or the load (5).

26. The device according to one or more of the claims from 16 to 25, **characterised in that** interface means (12) are designed to transmit to the unit (10) data relative to the distribution of the load (5) on the vehicle (1) so as to adjust the value of the output signals for the indicator (7).

27. A method for checking a vehicle (1) load (5), **characterised in that** it comprises the following steps:
- detection of vehicle (1) load (5) data;
- transmission of the load (5) data;
- reception of the load data transmitted;
- processing of the load data received, and its correlation with predetermined safety limits, so as to obtain one or more output signals corresponding to the load conditions detected;
- indication to a user, on the basis of the output signals, when the load detected reaches and/or approaches said safety limits.

28. The method according to claim 27, in which the vehicle (1) is of the type with a tipper body (4) operated by a hydraulic cylinder (3), **characterised in that** the pressure (6) of the cylinder (3) is detected during the detection step.

29. The method according to one or both of the claims 27 and 28, **characterised in that** the transmission and reception occur without a cable, preferably by means of radio frequency.

30. The method according to one or more of the claims from 27 to 29, **characterised in that** the transmission and reception occur by means of a cable.

31. The method according to one or more of the claims from 27 to 30, **characterised in that** the transmission and reception steps comprise a unique reciprocal recognition step.

32. The method according to one or more of the claims from 27 to 31, **characterised in that** the unique recognition step comprises the transmission of a signal with a unique address for the vehicle (1) involved.

33. The method according to one or more of the claims from 27 to 32, **characterised in that** the indication is visual.

34. The method according to claim 33, **characterised in that** the indication is displayed in different colours in response to output signals close to and/or corresponding to the value of the predetermined safety limits.

35. The method according to one or more of the claims from 27 to 34, **characterised in that** it comprises a calibration step based on data relative to the vehicle load or the vehicle itself.

36. The method according to one or more of the claims from 27 to 35, **characterised in that** it comprises a step of processing data relative to the distribution of the load on the vehicle (1) so as to adjust the value of the output signals for the indicator (7).
